(19) Europäisches Patentamt
European Patent Office
Office européen des brevets

(11) **EP 4 691 231 A1**

(12) **EUROPEAN PATENT APPLICATION**
published in accordance with Art. 153(4) EPC

(43) Date of publication:
**11.02.2026 Bulletin 2026/07**

(21) Application number: **24784676.9**

(22) Date of filing: **11.03.2024**

(51) International Patent Classification (IPC):
*A01K 23/00* (2006.01)

(52) Cooperative Patent Classification (CPC):
**A01K 23/00**

(86) International application number:
**PCT/JP2024/009221**

(87) International publication number:
**WO 2024/209881 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 JP 2023062650**

(71) Applicant: **DAIO PAPER CORPORATION Shikokuchuo-shi Ehime 799-0492 (JP)**

(72) Inventor: **HONJO, Ryota Shikokuchuo-shi, Ehime 799-0113 (JP)**

(74) Representative: **Meissner Bolte Partnerschaft mbB Patentanwälte Rechtsanwälte Postfach 86 06 24 81633 München (DE)**

(54) **ABSORBENT ARTICLE FOR PETS**

(57) An absorbent article for a pet, which is configured to cover a region from an abdomen to a back of the pet extending via a tail of the pet, includes a tail-hole forming portion in a region facing the tail. The tail-hole forming portion includes a slit bulging toward one of the abdomen or the back, and two perforations, each of the perforations extending from a corresponding end of both ends of the slit toward another of the abdomen or the back.

FIG.1

EP 4 691 231 A1

## Description

### TECHNICAL FIELD

The present invention relates to an absorbent article for pets.

### BACKGROUND ART

In recent years, disposable diapers for pets, such as dogs, cats, and the like, have been known. Since pets, such as dogs, cats, and the like, have tails, unlike humans, the disposable diapers preferably have structures that take the tails into consideration.

Patent Literature 1 discloses a paper diaper for pets in which perforations are provided as a cut open means in a portion without a liquid-absorbing material. In the paper diaper for pets disclosed in Patent Literature 1, a hole is formed for a tail to pass through by cutting off a region enclosed by the perforations in accordance with a size and position of a tail of a pet.

### CITATION LIST

### PATENT LITERATURE

Patent Literature 1: Japanese Patent No. 2983929

### SUMMARY OF THE INVENTION

### TECHNICAL PROBLEM

In the diaper disclosed in Patent Literature 1, a user has to cut off the region enclosed by the perforations in accordance with the size and position of the tail of the pet to form the hole for the tail to pass through. This leads to an increase in the burden placed on the user. Moreover, cutting off the region enclosed by the perforations from the diaper results in additional waste independent of the diaper itself. Furthermore, the user often has to cut off the region enclosed by the perforations to use the diaper. This also leads to an increase in the burden placed on the user.

The present invention has been made in light of the problems in the related art as described above, and an object thereof is to provide an absorbent article for pets, which can accommodate differences in positions and sizes of tails of pets with less burden.

### SOLUTION TO THE PROBLEM

To achieve the above-described object, an absorbent article for a pet, which covers a region from an abdomen to a back of a pet extending via a tail of the pet, includes:

a tail-hole forming portion in a region facing the tail, in which
the tail-hole forming portion includes

a slit bulging toward one of the abdomen or the back, and
two perforations, each of the perforations extending from a corresponding end of both ends of the slit toward another of the abdomen or the back.

In the present invention constituted as described above, a flap is formed by the bulged slit, and a tail hole is formed by lifting the flap, so that the tail can be inserted. By tearing the two perforations extending from both ends of the slit to an extent corresponding to the position and size of the tail, the flap is enlarged, and the tail hole is formed by lifting the flap, so that the tail can be inserted.

In this way, the size of the flap to be lifted is adjusted by not tearing the perforations or by changing an extent of tearing the perforations upon tearing the perforations. Thus, the size of tail hole for passing the tail can be adjusted with less burden.

The two perforations may be formed so that the distance between the two perforations increases as increasing distance from the slit.

With such a configuration, it is possible to accommodate thick tails while preventing lateral displacement of a thin tail.

The slit may bulge toward the ventral side.

With such a configuration, a width toward the urethral opening is narrowed, thereby reducing urine leakage.

The slit may have a V-shape.

In the urine drainage device configured as described above, the end portion on the urine outlet side has a pointed shape, and thus urine leakage is further suppressed.

The ends of the perforations opposite to the slit may be formed in a rounded pattern.

With such a configuration, it is possible to avoid tearing beyond the perforations when tearing the perforations.

ADVANTAGEOUS EFFECTS OF THE INVENTION

According to the present invention, it is possible to accommodate differences in the positions and sizes of the tails of the pets with less burden.

BRIEF DESCRIPTION OF THE DRAWINGS

[FIG. 1] FIG. 1 is a view of an absorbent article for pets as seen from a skin-facing surface according to an embodiment of the present invention.

[FIG. 2] FIG. 2 is a cross-sectional view taken along the line A-A in FIG. 1.

[FIG. 3] FIG. 3 is a cross-sectional view taken along the line B-B in FIG. 1.

[FIG. 4] FIG. 4 is a cross-sectional view taken along the line C-C in FIG. 1.

[FIG. 5] FIG. 5 is a view illustrating a detailed configuration of a tail-hole forming portion illustrated in FIG. 1, in which (a) is a view illustrating an entire configuration, (b) is a view illustrating a configuration in the vicinity of a vertex of a slit, (c) is a view illustrating a configuration in the vicinity of an end of a perforation, and (d) is an explanatory view of a method of calculating an interior angle of the vertex illustrated in (b).

[FIG. 6] FIG. 6 is a view illustrating a usage form of the diaper illustrated in FIG. 1.

[FIG. 7] FIG. 7 is an explanatory view of the diaper illustrated in FIG. 1 used as a pull-up diaper in an embodiment.

[FIG. 8] FIG. 8 is an explanatory view of the diaper illustrated in FIG. 1 used as a tape diaper in an embodiment.

[FIG. 9] FIG. 9 is an explanatory view of a method of using the tail-hole forming portion illustrated in FIGS. 1 and 5.

[FIG. 10] FIG. 10 is an explanatory view of the operation of the slit illustrated in FIG. 5.

[FIG. 11] FIG. 11 is a view illustrating a tail-hole forming portion according to another embodiment.

[FIG. 12] FIG. 12 is a view of an absorbent article for pets as seen from a skin-facing surface according to another embodiment of the present invention.

DESCRIPTION OF THE EMBODIMENTS

Hereinafter, embodiments of the present invention will be described with reference to the drawings. In the drawings, the same or corresponding components are denoted by the same reference signs, and the descriptions thereof may be omitted unless otherwise specified. Directions, such as orthogonal, right, left, and the like, allow deviation to the extent that it does not affect the operation and effects of the embodiments. The shape of a corner is not limited to a right angle, and may be rounded in a manner similar to an arc. The term "orthogonal" may include "substantially orthogonal." Herein, a front-back direction of a diaper 1 is referred to as D1, and a width direction of the diaper 1 orthogonal to the front-back direction is referred to as D2. The front-back direction corresponds to a front-back direction of a pet. Herein, the front side in the front-back direction of the diaper 1 is referred to as a ventral side or the front, and the rear side in the front-back direction of the diaper 1 is referred to as a dorsal side or the rear. A surface of the diaper 1 facing a pet is referred to as a skin-facing surface, and a surface of the diaper 1 opposite to the skin-facing surface is referred to as a non-skin-facing surface.

(Entire Configuration)

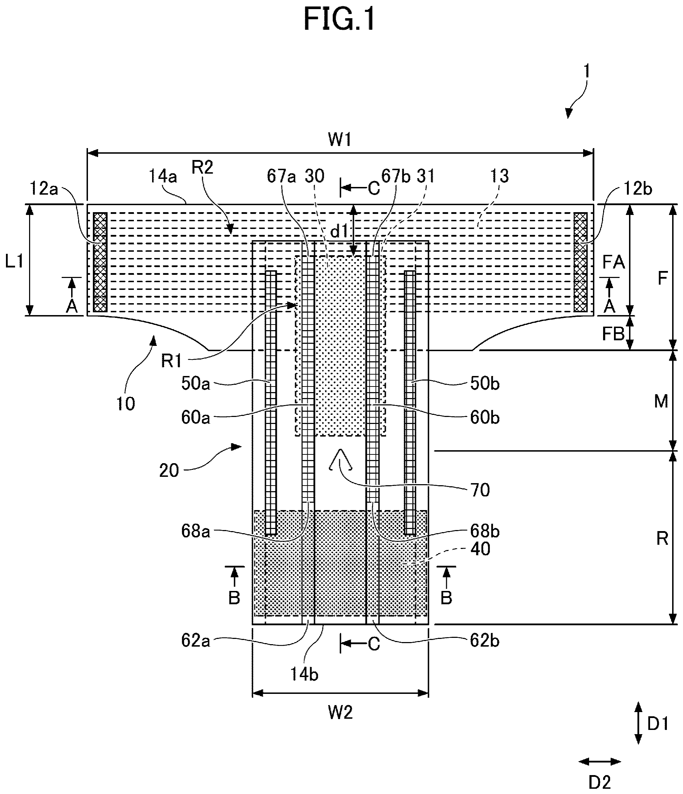

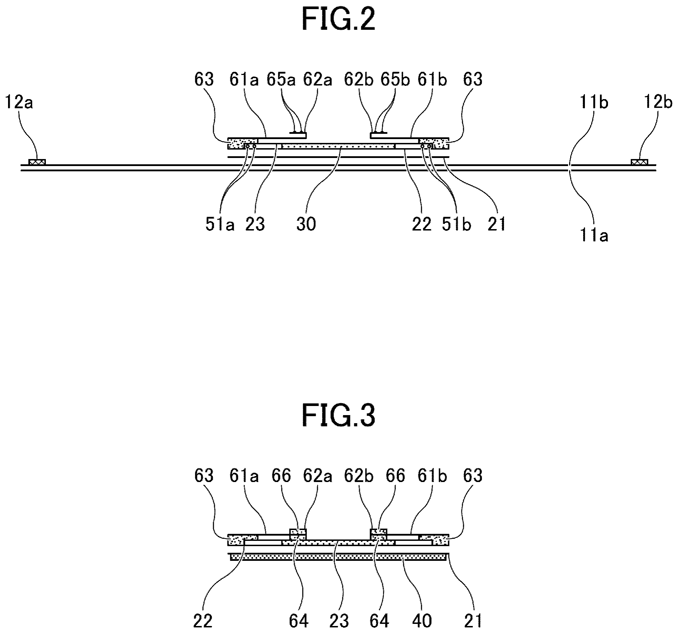

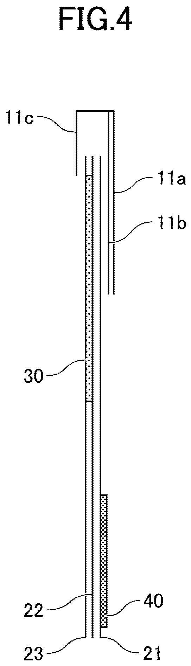

FIG. 1 is a view of an absorbent article for pets as seen from the skin-facing surface according to an embodiment of the present invention and is a plan view in a deployed state. FIG. 2 is a cross-sectional view taken along the line A-A in FIG. 1. FIG. 3 is a cross-sectional view taken along the line B-B in FIG. 1. FIG. 4 is a cross-sectional view taken along the line C-C in FIG. 1.

In the present embodiment as illustrated in FIG. 1, the diaper 1 is constituted by connecting a dorsal region R, a buttocks-covering region M, and a ventral region F in this order in the front-back direction D1. The dorsal region R is a portion that covers the dorsal side from a base of a tail of a pet wearing the diaper 1. The buttocks-covering region M is a portion that covers the anus and the vicinity of the lower side of the anus, which are located lower than the base of the tail of the pet wearing the diaper 1. The ventral region F is a portion that covers an abdominal portion of the pet wearing the diaper 1, which is located on the front side of the buttocks-covering region M. In the ventral region F, an abdominal band region FA and leg-surrounding regions FB are arranged in the front-back direction D1, and the abdominal band region FA is located toward a ventral end 14a of the diaper 1 in the front-back direction D1 of the diaper 1. Thus, when worn, the diaper 1 is configured to cover a region from the abdomen to the back of the pet extending through the tail of the pet.

The diaper 1 includes an outer body 10 and an inner body 20. The outer body 10 is disposed only in the ventral region F, and the inner body 20 is disposed over a part of the ventral region F, the dorsal region R, and the buttocks-covering region M. A length W1 of the outer body 10 in the width direction D2 is longer than a length W2 of the inner body 20 in the width direction D2. Accordingly, a length of the ventral region F in the width direction D2 is longer than lengths of the dorsal region R and buttocks-covering region M in the width direction D2. Specifically, the outer body 10 may have a length of 165 mm in the front-back direction D1 and a length of 600 mm in the width direction D2. The inner body 20 may have a length of 410 mm in the front-back direction D1 and a length of 190 mm in the width direction D2. The inner body 20 is disposed so as to overlap with a part of the outer body 10 at a central portion of the outer body 10 in the width direction D2. For example, the inner body 20 may overlap with the outer body 10 such that a region of the inner body 20 extending by 135 mm on the ventral side in the front-back direction D1 is placed on the skin-facing surface of the outer body 10. Accordingly, the outer body 10 and the inner body 20 overlap with each other at a part of the abdominal band region F, and the diaper 1 forms a T-shape as a whole. In such as case, the diaper 1 may have a size of 440 mm in length in the front-back direction D1 and 600 mm in length in the width direction D2. The term "length" as used herein means a length of the diaper 1 in its deployed and fully stretched state. The diaper 1 preferably has a length of 300 mm to 600 mm in the front-back direction D1. The outer body 10 preferably has a length of 500 mm to 800 mm in the width direction D2. The inner body 20 preferably has a length of 100 mm to 250 mm in the width direction D2. This enables the diaper 1 to fit around the legs and the torso of the pet when worn.

(Outer Body 10)

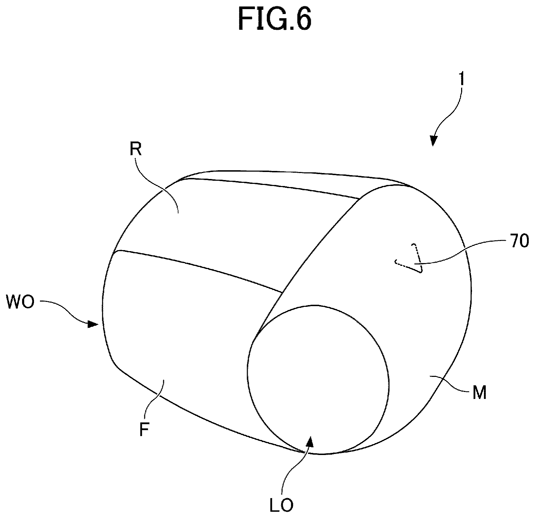

Together with a portion of the inner body 20, which overlaps with the outer body 10, the outer body 10 constitutes the ventral region F. The outer body 10 forms, in the abdominal band region FA of the ventral region F, a band-like shape in the width direction D2 serving as the longitudinal direction. In the leg-surrounding regions FB of the ventral region F, both ends of the outer body 10 in the width direction D2 are cut in a curved shape so that a part of leg openings LO (see FIG. 6) is formed when the pet wears the diaper 1. Accordingly, the outer body 10 is shaped such that a length of the outer body 10 in the width direction D2 in the leg-surrounding regions FB are gradually shortened as the leg-surrounding regions FB extend away from the abdominal band portion FA.

The outer body 10 is constituted by bonding two outer sheets 11a and 11b with an adhesive such as a hot-melt adhesive or the like. The two outer sheets 11a and 11b may be bonded only partially with the adhesive. Of the two outer sheets 11a and 11b, the outer sheet 11a disposed outward is folded back inward at the ventral end in the front-back direction D1 of the diaper 1, and has a folded-back portion 11c. The folded-back portion 11c covers a part of the inner body 20.

The two outer sheets 11a and 11b are not particularly limited as long as they are in the form of a sheet for use, and nonwoven fabric is preferably used. The raw fiber of the nonwoven fabric is not particularly limited. For example, the nonwoven fabric may be made of: synthetic fibers such as olefin-based fibers (e.g., polyethylene, polypropylene, and the like), polyester-based fibers, polyamide-based fibers, or the like; regenerated fibers such as rayon, cupra, and the like; natural fibers such as cotton and the like; mixed fibers or composite fibers incorporating two or more of those mentioned; or the like. The nonwoven fabric may be produced by any suitable processing method.

A plurality of elastic members 13 are interposed between the two outer sheets 11a and 11b in the abdominal band region FA. The elastic members 13 may be thin and long for use. The plurality of elastic members 13 are directed to stretch and recover in the width direction D2, extend between both ends of the outer body 10 in the width direction D2, and are fixed between the two outer sheets 11a and 11b in a state of being parallel to each other with a space in the front-back direction D1.

The plurality of elastic members 13 are arranged from a region located at a distance of 0 mm to 5 mm from the ventral end 14a of the diaper 1 toward a dorsal end of the diaper 1. The plurality of elastic members 13 may be arranged in a region located at a distance of 0 mm to 5 mm from a dorsal end of the abdominal band region FA in the front-back direction D1. The plurality of elastic members 13 are not limited to be provided between both ends of the abdominal band region FA in the front-back direction D1, and may be provided except in regions located at a distance of 5 mm from respective ends of the abdominal band region FA in the front-back direction D1. In both cases, the plurality of elastic members 13 are defined as being provided across the entire abdominal band region FA in the front-back direction D1. In this case, the plurality of elastic members 13 may be partially provided in places across the entire abdominal band region FA in the front-back direction D1. The elastic members 13 may be fixed to the outer sheets 11a and 11b by hot-melt adhesion, heat sealing, ultrasonic adhesion, or the like. It is not necessary for all of the elastic members 13 to have the same thickness and elongation percentage. For example, the elastic members 13 may have different thicknesses and elongation rates toward the end 14a of the diaper 1 and toward the leg-surrounding regions FB. Herein, a part of the inner body 20 overlaps with the outer body 10 as described above. In such a case, the outer body 10 has a first region R1 and a second region R2 in the abdominal band region FA. The first region R1 overlaps with an absorbent core 30 of the inner body 20, and the second region R2 does not overlap with the absorbent core 30. The outer body 10 stretches and recovers in the abdominal band region FA in the width direction D2 because the elastic members 13 are interposed between the two outer sheets 11a and 11b. The outer body 10 stretches and recovers in the second region R2 in the width direction D2, but not in the first region R1 in the width direction D2. This may be achieved by, for example, cutting the elastic members 13 only in the first region R1 with a shearing cutter. In addition, the outer body 10 becomes less stretchable and less recoverable in the first region R1 in the width direction D2 simply by overlapping with the absorbent core 30.

Examples of the elastic members 13 include rubber threads, elastic films, members formed by bonding nonwoven fabrics to the rubber threads or the elastic members, or the like. Commonly used styrene-based rubbers, olefin-based rubbers, urethane-based rubbers, ester-based rubbers, polyurethane, polyethylene, polystyrene, styrene-butadiene, silicone, polyester, or the like may be used as a material to constitute the elastic members 13.

Hook tapes 12a and 12b are attached to respective ends of the outer body 10 in the abdominal band region FA in the width direction D2. The hook tapes 12a and 12b have a belt-like shape and are attached to the outer body 10 in a direction in which the longitudinal direction coincides with the front-back direction D1 of the diaper 1. That is, the lengths of the hook tapes 12a and 12b in the longitudinal direction can be set as appropriate if they are shorter than or equal to the length of the outer body 10 in the abdominal band region FA in the front-back direction D1. Each of surfaces of the hook tapes 12a and 12b is formed of a hook member of a hook-and-loop fastener and is fixed, with the adhesive or the like, to the surface of the outer body 10 overlapping with the inner body 20.

(Inner Body 20)

The inner body 20 constitutes a part of the ventral region F, the buttocks-covering region M, and the dorsal region R. The inner body 20 includes a backsheet 21, a waterproof sheet 22, a top sheet 23, an absorbent core 30, a pair of flat gathers 50a and 50b, a pair of standing gathers 60a and 60b, and a target tape 40.

The backsheet 21 has the same outer shape as the inner body 20 and disposed on the outermost side of the inner body 20 toward the non-skin-facing surface. A nonwoven fabric is used as the backsheet 21. The constituent fiber of the nonwoven fabric is not particularly limited and can be selected from, for example, synthetic fibers (including single-component fibers and composite fibers such as core-sheath fibers and the like) such as olefin-based fibers (polyethylene, polypropylene, and the like), polyester-based fibers, and polyamide-based fibers, regenerated fibers such as rayon, cupra, and the like, natural fibers such as cotton and the like, and the like. These fibers can be mixed for use. Specific examples of the nonwoven fabric include a spunbonded nonwoven fabric, a meltblown nonwoven fabric, a spunlaced nonwoven fabric, a thermally bonded (air-through) nonwoven fabric, a needle-punched nonwoven fabric, a point-bonded nonwoven fabric, and a laminated nonwoven fabric (SSS (spunbonded + spunbonded + spunbonded) nonwoven fabric in which the same or similar nonwoven fabric layers are laminated). The fiber basis weight of the backsheet 21 is preferably from 10 to 50 $g/m^2$ and more preferably from 15 to 30 $g/m^2$.

The target tape 40 is attached to the non-skin-facing surface of the backsheet 21. The target tape 40 has a rectangular shape and is attached along the end 14b of the diaper 1 in the dorsal region R. A length of the target tape 40 in the width direction D2 may be, for example, 180 mm in a case in which a length of the backsheet 21 in the width direction D2 is 190 mm. In this manner, the target tape 40 is preferably attached to substantially the entire area of the backsheet 21 in the width direction D2. This case is also included in the definition that the target tape 40 is attached to the entire area of the backsheet 21 in the width direction D2. The target tape 40 has a surface formed of a loop material of a hook-and-loop fastener, and is fixed to the non-skin-facing surface of the backsheet 21 with an adhesive or the like.

The waterproof sheet 22 is a liquid-impervious sheet that does not allow excreted fluid to pass through. The waterproof sheet 22 is laminated on a skin-facing surface of the backsheet 21 and bonded thereto with an adhesive or the like. For example, a microporous sheet can be suitably used as the waterproof sheet 22. This microporous sheet is obtained as follows: an inorganic filler is kneaded in an olefin-based resin such as polyethylene, polypropylene, or the like and molded into a sheet; this sheet is elongated in a uniaxial or biaxial direction. The waterproof sheet 22 may be made of a nonwoven fabric serving as a base material to enhance waterproofness. The waterproof sheet 22 has the same outer shape as the inner body 20, but preferably extends across an area wider than the absorbent core 30 at least in the front-back direction D1 and in the width direction D2.

The absorbent core 30 is provided on the waterproof sheet 22 so as to be included in the ventral region F and the buttocks-covering region M at an intermediate portion of the diaper 1 in the width direction D2. The absorbent core 30 may be slightly shifted in the width direction D2 from the intermediate portion of the diaper 1 in the width direction D2. This case is also included in the definition that the absorbent core 30 is provided at the intermediate portion of the diaper 1 in the width direction D2. The absorbent core 30 is preferably disposed to be a region such that a distance d1 from an end 31 of the absorbent core 30 in the ventral region F to the ventral end 14a of the diaper 1 is 5 mm to 50 mm. The absorbent core 30 is more preferably disposed to be a region such that the distance d1 is 10 mm to 40 mm. This allows the absorbent core 30 to cover a urethral opening of a male pet wearing the diaper 1, and thus the diaper 1 can be used for male pets. The absorbent core 30 may be wrapped with a wrapping sheet made of crepe paper, nonwoven fabric, or the like for shape maintenance or the like. The absorbent core 30 is a portion that absorbs and retains excreted fluids and can be formed by a fibrous assembly. Examples of the fibrous assembly include a stacked assembly of short fibers such as fluff pulp, synthetic fibers, natural fibers derived from softwood or hardwood, and the like, and a filament assembly obtained by opening a tow of synthetic fibers such as cellulose acetate or the like, as necessary. The fiber basis weight can be, for example, from about 100 to 300 g/m$^2$ in the case of stacking fluff pulp or short fibers. The fiber basis weight can be, for example, from about 30 to 120 g/m$^2$ in the case of a filament assembly. In the case of synthetic fibers, the fineness is, for example, preferably from 1 to 16 dtex, more preferably from 1 to 10 dtex, and still more preferably from 1 to 5 dtex. The absorbent core 30 may contain superabsorbent polymer particles in part or in whole. The superabsorbent polymer particles include powder in addition to particles. As the superabsorbent polymer particles, those used in this type of absorbent article can be directly used. Examples of the material of the superabsorbent polymer particles include starch-based, cellulose-based, or synthetic polymer-based materials. The shape of the absorbent core 30 in a plan view may be a shape in which a central portion in the front-back direction D1 is narrowed. In other words, the length of the absorbent core 30 in the width direction D2 may be gradually shortened toward the center in the front-back direction D1.

The top sheet 23 is a liquid-permeable sheet that allows excreted fluids such as urine and the like to pass through quickly. The top sheet 23 has the same length as the inner body 20 in the front-back direction D1 of the diaper 1. In the width direction D2, the top sheet 23 extends laterally beyond the absorbent core 30 and has a length sufficient to cover the absorbent core 30 and the flat gathers 50a and 50b. The top sheet 23 is laminated on the waterproof sheet 22 so as to cover the absorbent core 30 and the flat gathers 50a and 50b, and is bonded to the waterproof sheet 22. Thus, the absorbent core 30 is interposed between the waterproof sheet 22 and the top sheet 23. Note that modifications can be made as appropriate, such as making the length of the top sheet 23 in the width direction D2 shorter than the length of the absorbent core 30 in the width direction D2 as necessary, and the like in a case in which rising ends of the standing gathers 60a and 60b described later are positioned closer to the center in the width direction D2 than side edges of the absorbent core 30, or the like.

As the top sheet 23, a porous or nonporous nonwoven fabric, a porous plastic sheet, or the like is suitably used. The constituent fiber of the nonwoven fabric is not particularly limited and can be selected from, for example, synthetic fibers (including single-component fibers and composite fibers such as core-sheath fibers) such as olefin-based fibers (e.g., polyethylene, polypropylene, and the like), polyester-based fibers, polyamide-based fibers, or the like, regenerated fibers such as rayon, cupra, and the like; natural fibers such as cotton and the like; mixed fibers or composite fibers incorporating two or more of those mentioned; or the like. In order to enhance the flexibility of the nonwoven fabric, the constituent fibers are preferably crimped fibers. The constituent fibers of the nonwoven fabric may be hydrophilic fibers (including hydrophilic fibers that have been made hydrophilic by a hydrophilizing agent), or may be hydrophobic fibers or water-repellent fibers (including water-repellent fibers that have been made water-repellent by a water-repellent agent).

The nonwoven fabrics are generally classified into short fiber nonwoven fabrics, long fiber nonwoven fabrics, spunbond nonwoven fabrics, meltblown nonwoven fabrics, spunlace nonwoven fabrics, thermal-bonded (air-through) nonwoven fabrics, needle-punched nonwoven fabrics, point-bonded nonwoven fabrics, laminated nonwoven fabrics (SSS (spunbond + spunbond + spunbond) nonwoven fabrics in which the same or similar nonwoven fabric layers are laminated, SMS (spunbond + meltblown + spunbond) nonwoven fabrics in which different nonwoven fabric layers are laminated and a meltblown layer is interposed between spunbond layers, SMMS (spunbond + meltblown + meltblown + spunbond) nonwoven fabrics, and the like), and the like depending on the length of the fibers, a sheet forming method, a fiber bonding method, and a laminated structure, and any of these nonwoven fabrics can be used. The laminated nonwoven fabric is preferably produced as an integral nonwoven fabric including all the layers, and is preferably subjected to fiber bonding process across all the layers. This can improve the texture, and therefore, when the skin of the pet is contacted, it is possible to prevent the skin from being irritated. The laminated nonwoven fabric may be a laminate of a plurality of nonwoven fabrics separately produced and bonded together by a bonding means such as a hot melt adhesive,

or the like.

The standing gathers 60a and 60b have a function of preventing lateral movement of excrement across the top sheet 23, thereby preventing lateral leakage. The standing gathers 60a and 60b extend along both sides of the absorbent core 30 in the front-back direction D1. The two gather sheets 61a and 61b laminated on the top sheet 23 are folded back. The two gather sheets 61a and 61b are disposed at a predetermined interval in the central portion in the width direction D2 of the diaper 1, and the mutually opposing sides are folded back to form folded-back portions 62a and 62b. The lengths of the two gather sheets 61a and 61b in the front-back direction D1 are equal to the length of the inner body 20, and the folded-back portion 62a and 62b are disposed so as to overlap with the absorbent core 30. The two gather sheets 61a and 61b are disposed such that the sides opposite to the folded-back portions 62a and 62b, that is, the outer sides in the width direction D2, overlap with the sides of the waterproof sheet 22 and the backsheet 21. The outer sides of the two gather sheets 61a and 61b in the width direction D2 are fixed to the top sheet 23 and the waterproof sheet 22 by the adhesive 63 over the entire lengths in the front-back direction D1.

As for ventral ends of the standing gathers 60a and 60b in the front-back direction D1, the folded-back portions 62a and 62b are fixed to the top sheet 23 with an adhesive 64 and are prevented from being opened with an adhesive 66. Boundaries between portions where the folded-back portions 62a and 62b are fixed to the top sheet 23 and portions where the folded-back portions 62a and 62b are not fixed to the top sheet 23 serve as rising ends 67a and 67b of the standing gathers 60a and 60b in the ventral region F. The rising ends 67a and 67b of the standing gathers 60a and 60b are preferably positioned within a range of 0 mm to 5 mm toward the ventral end 14a of the diaper 1 and within a range of 0 mm to 5 mm toward the dorsal end 14b of the diaper 1, rather than the end 31 of the absorbent core 30 in the ventral region F.

In a region facing the dorsal ends of the standing gathers 60a and 60b in the front-back direction D1 and the target tape 40, the folded-back portions 62a and 62b are fixed to the top sheet 23 with the adhesive 64 and are prevented from being opened with the adhesive 66. Boundaries between portions where the folded-back portions 62a and 62b are fixed to the top sheet 23 and portions where the folded-back portions 62a and 62b are not fixed to the top sheet 23 serve as rising ends 68a and 68b of the standing gathers 60a and 60b in the dorsal region R. The rising ends 68a and 68b of the standing gathers 60a and 60b are preferably positioned within a range of 100 mm to 200 mm from the dorsal end 14b toward the ventral end 14a of the diaper 1.

The folded-back portions 62a and 62b include elastic members 65a and 65b that stretch and recover in the front-back direction D1 in the regions where the folded-back portions 62a and 62b are not fixed to the top sheet 23 with the adhesive 64.

In the standing gathers 60a and 60b thus configured, the regions not fixed to the top sheet 23 with the adhesive 64 can rise toward the skin-facing surface with the ends of the portions fixed with the adhesive 63 serving as the rising ends 67a, 67b, 68a, and 68b. This enables the standing gathers 60a and 60b to rise by using the elastic recovery force of the elastic members 65a and 65b. Rising of the standing gathers 60a and 60b brings the standing gathers 60a and 60b into close contact with the body surfaces of the pet. In the example shown in FIG. 2, the folded-back portions 62a and 62b each include two elastic members 65a and 65b, but the number of the elastic members may be one. On the other hand, as illustrated in FIG. 3, both ends of the standing gathers 60a and 60b in the front-back direction D1 do not rise toward the skin-facing surface because both ends are fixed to the top sheet 23 with the adhesive 64 as described above.

Examples of the adhesives 63, 64, and 66 include a hot-melt adhesive. In the present embodiment, the adhesives 63, 64, and 66 are used as a fixing means, but the fixing means is not limited thereto, and any fixing means such as fusion, pressure bonding, or the like can be used.

Commonly used styrene-based rubbers, olefin-based rubbers, urethane-based rubbers, ester-based rubbers, polyurethane, polyethylene, polystyrene, styrene-butadiene, silicone, polyester, or the like may be used as a material of the elastic members 65a and 65b.

As the gather sheets 61a and 61b, nonwoven fabrics obtained by an appropriate processing method such as a spunbond method, an air-through method, a meltblown method, a needle-punch method, or the like can be used. A fiber material constituting the gather sheets 61a and 61b may be synthetic fibers such as olefin-based fibers (e.g., polyethylene, polypropylene, and the like), polyester-based fibers, amide-based fibers, and the like, regenerated fibers such as rayon, cupra, and the like, or natural fibers such as cotton or the like.

The flat gathers 50a and 50b are constituted by elastic members 51a and 51b disposed between the top sheet 23 and the waterproof sheet 22 and fixed thereto. The elastic members 51a and 51b are disposed in parallel with the standing gathers 60a and 60b on the outer side of the standing gathers 60a and 60b in the region not overlapping with the absorbent core 30, and are stretched and recovered in the front-back direction D1. The ventral ends of the flat gathers 50a and 50b are positioned closer to the dorsal side than the ventral rising ends 67a and 67b of the standing gathers 60a and 60b in the ventral region F. The dorsal ends of the flat gathers 50a and 50b are positioned in a region overlapping with the target tape 40 in the dorsal region R. The flat gathers 50a and 50b hold the diaper 1 along the peripheries of the legs to improve a fit and prevent the diaper 1 from being shifted when the diaper 1 is worn. For the elastic members 51a and 51b, the same materials as those of the elastic members 65a and 65b of the standing gathers 60a and 60b can be used.

By disposing the flat gathers 50a and 50b in parallel with the standing gathers 60a and 60b, the flat gathers 50a and 50b can increase the elastic stretching force and elastic recovery force of the standing gathers 60a and 60b in the front-back direction D1 of the diaper 1, and a urine capture space can be easily formed. Since the diaper 1 can be held along the peripheries of the legs to further improve the fit, it is possible to reduce urine leakage to the dorsal region R.

(Tail-Hole Forming Portion 70)

In the dorsal region R of the diaper 1, a tail-hole forming portion 70 is provided to form a tail hole that passes the tail of the pet in a region not provided with the target tape 40. This region is in the vicinity of the end of the dorsal region R toward the buttocks-covering region M and faces the tail of the pet wearing the diaper 1.

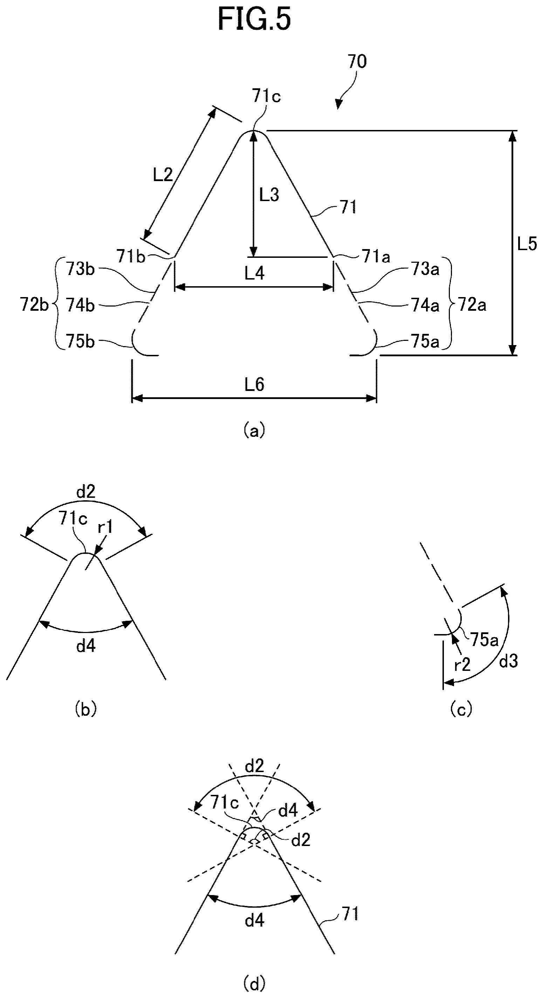

FIG. 5 is a view illustrating a detailed configuration of the tail-hole forming portion 70 illustrated in FIG. 1, in which (a) is a view illustrating an entire configuration, (b) is a view illustrating a configuration in the vicinity of a vertex 71c of a slit 71, (c) is a view illustrating a configuration in the vicinity of an end 75a of a perforation 72a, and (d) is an explanatory view of a method of calculating an interior angle d4 of the vertex 71c illustrated in (b).

As illustrated in FIG. 5, the tail-hole forming portion 70 in the present embodiment has a slit 71 and two perforations 72a and 72b.

The slit 71 penetrates the backsheet 21, the waterproof sheet 22, and the top sheet 23, and has a shape bent in a V-shape via the rounded vertex 71c. That is, the rounded vertex is also defined as a V-shaped vertex herein. A radius r1 of the vertex 71c is preferably 10 mm or less, and an angle d2 of the vertex 71c is preferably 90 degrees to 150 degrees. As illustrated in FIG. 5(d), an interior angle d4 of the vertex 71c can be obtained from the following equation using the sum of the interior angles of a quadrangle having a vertex with the angle d2, a vertex with the angle d4, and two vertices with right angles.

$$\begin{aligned} \text{d4} \quad &= 360° - (90° \times 2) - \text{d2} \\ &= 360° - 180° - \text{d2} \\ &= 180° - \text{d2} \end{aligned}$$

A length L2 of the slit 71 from the vertex 71c to both ends 71a and 71b is preferably 10 mm to 50 mm. For example, the length L2 from the vertex 71c to both ends 71a and 71b may be 28 mm. A length L3 from the vertex 71c to both ends 71a and 71b in a direction of a bisecting line from the vertex 71c is preferably 10 mm to 35 mm. For example, the length L3 from the vertex 71c to both ends 71a and 71b in the direction of the bisecting line from the vertex 71c may be 26 mm. An interval L4 between both ends 71a and 71b is preferably 5 mm to 70 mm. For example, the interval L4 between both ends 71a and 71b may be 33 mm. The vertex 71c of the slit 71 is directed toward the ventral region F, and thus the slit 71 bulges toward the ventral side of the pet wearing the diaper 1.

The perforation 72a is connected to one end 71a of the slit 71 and extends from the end 71a along an extension line of the slit 71. Therefore, the perforation 72a extends from the one end 71a of the slit 71 toward the dorsal side of the pet wearing the diaper 1. The perforation 72a is constituted by alternately disposing a cut portion 73a and a tie portion 74a. As for a pitch at which the cut portion 73a and the tie portion 74a are alternately disposed, the tie portion 74a is preferably about 0.5 mm to 3 mm and more preferably about 1 mm to 2 mm. For example, a length of the cut portion 73a may be 3.5 mm, and a length of the tie portion 74a may be 1.5 mm. The cut portion 73a penetrates the backsheet 21, the waterproof sheet 22, and the top sheet 23. The perforation 72a thus constituted preferably has three or more cut portions 73a. The end 75a of the perforation 72a opposite to the slit 71 is formed in a rounded pattern curved inward of the tail-hole forming portion 70. A radius r2 of the end 75a is preferably 10 mm or less, and an angle d3 of the end 75a is preferably 30 degrees to 270 degrees. The end 75a of the perforation 72a may be formed in a rounded pattern curved outward of the tail-hole forming portion 70.

The perforation 72b is connected to one end 71b of the slit 71 and extends from the end 71b along an extension line of the slit 71. Therefore, the perforation 72b extends from the one end 71a of the slit 71 toward the dorsal side of the pet wearing the diaper 1. The perforation 72b is constituted by alternately disposing a cut portion 73b and a tie portion 74b. As for a pitch at which the cut portion 73b and the tie portion 74b are alternately disposed, the tie portion 74b is preferably about 0.5 mm to 3 mm and more preferably about 1 mm to 2 mm. For example, a length of the cut portion 73b may be 3.5 mm, and a length of the tie portion 74a may be 1.5 mm. The cut portion 73b penetrates the backsheet 21, the waterproof sheet 22, and the top sheet 23. The perforation 72a thus constituted preferably has three or more cut portions 73b. An end 75b of the perforation 72b opposite to the slit 71 is formed in a rounded pattern curved inward of the tail-hole forming portion 70. A radius of the end 75b is preferably 10 mm or less, and an angle of the end 75b is preferably 30 degrees to 270 degrees. The end 75b of the perforation 72b may be formed in a rounded pattern curved outward of the tail-hole forming portion 70.

Thus, the perforations 72a and 72b extend along the respective extension lines of the V-shaped slit 71. Accordingly, the two perforations 72a and 72b are formed such that the distance therebetween increases in accordance with increasing distance from the slit.

In the tail-hole forming portion 70 thus constituted, a length L5 in the front-back direction D1 of the diaper 1 is preferably 25 mm to 60 mm, and a length L6 in the width direction D2 is preferably 6 mm to 120 mm. For example, both the length L5 in the front-back direction D1 and the length L6 in the width direction D2 may be 45 mm.

(Usage Form of Diaper 1)

FIG. 6 is a view illustrating a usage form of the diaper 1 illustrated in FIG. 1.

The diaper 1 illustrated in FIG. 1 is used as a pull-up diaper. In this case, as illustrated in FIG. 6, the diaper 1 is folded back in the buttocks-covering region M so that the skin-facing surface is inward, and the skin-facing surfaces at both ends of the ventral region F in the width direction D2 face the non-skin-facing surface of the dorsal region R. The hook tapes 12a and 12b are attached to the skin-facing surface at both ends of the ventral region F in the width direction D2, and the target tape 40 is attached to the non-skin-facing surface of the dorsal region R. Accordingly, the ventral region F and the dorsal region R are joined together by engagement between the hook tapes 12a and 12b and the target tape 40.

Thus, the abdominal band region FA of the ventral region F and the dorsal region R form a waist opening WO for passing the torso of the pet. The leg-surrounding regions FB of the ventral region F and the buttocks-covering region M form a pair of right and left leg openings LO for passing the rear legs of the pet. In such a case, the abdominal band region FA of the ventral region F tightens the torso of the pet. However, the elastic members 13 that stretch and recover in the width direction D2 are provided across the entire abdominal band region FA in the front-back direction D1. This imparts a fit to the pull-on diaper 1 like underwear. Moreover, if the hook tapes 12a and 12b are engaged with a region of the target tape 40 which conforms to the body shape of the pet wearing the diaper 1 to form the pull-up diaper 1, the pull-up diaper conforming to the body shape of the pet wearing the diaper 1 can be selected. By setting the length of the abdominal band region FA in the front-back direction D1 to be 80 mm or longer, the joining portion of the abdominal band region FA and the dorsal region R is widened, further enhancing a fit given by the pull-up diaper 1.

In a case in which the elastic members 13 are stretchable 1.5 to 3.5 times the length of the abdominal band region FA in the width direction D2 in a state where the elastic members 13 are recovered, it is possible to further enhance a fit given by the pull-up diaper 1.

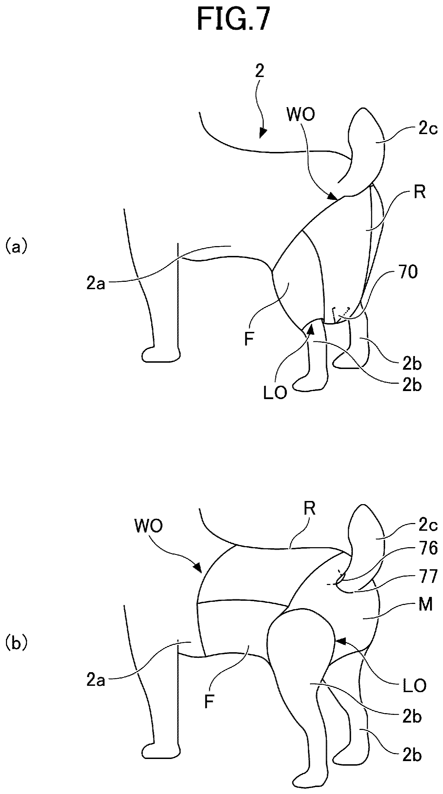

FIG. 7 is an explanatory view of the diaper 1 illustrated in FIG. 1 used as a pull-up diaper in an embodiment. In FIG. 7, a case in which the diaper 1 illustrated in FIG. 1 is worn on a dog as an example of the pets is described as an example.

The diaper 1 illustrated in FIG. 1 can be used in the form of a pull-up diaper as illustrated in FIG. 6.

In this case, as illustrated in FIG. 7(a), legs 2b of a dog 2 as a pet are first passed through the waist opening WO formed by the ventral region F and the dorsal region R. Then, the legs 2b of the dog 2 are passed through the pair of leg openings LO formed by the leg-surrounding regions FB of the ventral region F and the buttocks-covering region M.

Thereafter, the diaper 1 is moved toward the ventral side of the dog 2 while a torso 2a of the dog 2 is passed through the waist opening WO as if underwear were worn on the dog 2. Then, as illustrated in FIG. 7(b), after the legs 2b of the dog 2 are passed through the leg openings LO, the ventral region F surrounds the torso 2a of the dog 2, the buttocks-covering region M covers the buttocks of the dog 2, and the dorsal region R covers the back of the dog 2. In the tail-hole forming portion 70, a flap 76 formed by the V-shaped slit 71 is lifted to form a tail hole 77, and a tail 2c of the dog 2 is passed through the tail hole 77. The detailed operation of the tail-hole forming portion 70 will be described later.

In this state, the elastic members 13 that stretch and recover in the width direction D2 are provided across the entire abdominal band region FA of the ventral region F in the front-back direction D1. This imparts a fit to the pull-on diaper 1 like underwear.

In this manner, the diaper 1 illustrated in FIG. 1 can be worn on a pet as a pull-up diaper as illustrated in FIG. 6.

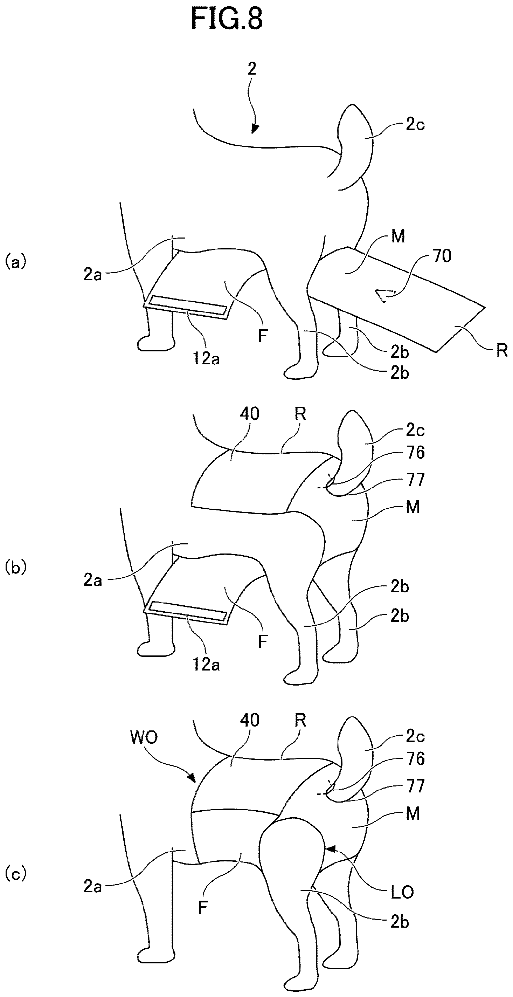

FIG. 8 is an explanatory view of the diaper 1 illustrated in FIG. 1 used as a tape diaper in an embodiment. In FIG. 8, a case in which the diaper 1 illustrated in FIG. 1 is worn on a dog as an example of the pets is described as an example.

The diaper 1 illustrated in FIG. 1 can be used in the form of a tape diaper.

In this case, first, the hook tapes 12a and 12b and the target tape 40 are detached from each other in the form illustrated in FIG. 6. As described above, the surfaces of the hook tapes 12a and 12b are formed of the hook members of the hook-and-loop fastener, and the surface of the target tape 40 is formed of the loop member of the hook-and-loop fastener. Therefore, the hook tapes 12a and 12b and the target tape 40 are constituted to be able to repeatedly attach and detach to and from each other. Accordingly, the hook tapes 12a and 12b and the target tape 40 can be detached from each other in the form illustrated in FIG. 6.

The hook tapes 12a and 12b and the target tape 40 are detached from each other, and the diaper 1 is deployed into the state illustrated in FIG. 1. Then, as illustrated in FIG. 8(a), the diaper 1 is disposed such that a central portion of the ventral region F in the width direction D2 is brought into contact with an abdomen of the dog 2, and the two legs 2b of the dog 2 straddle the buttocks-covering region M. In such a case, the skin-facing surface is directed to be in contact with the dog 2.

Next, as illustrated in FIG. 8(b), the dorsal region R is raised and folded back at the buttocks-covering region M so that the skin-facing surface is inward. Then, the flap 76 formed by the V-shaped slit 71 of the tail-hole forming portion 70 is lifted to form the tail hole 77. The tail 2c of the dog 2 is passed through the tail hole 77, and the dorsal region R is brought into contact with the back of the dog 2.

Thereafter, as illustrated in FIG. 8(c), both ends of the ventral region F in the width direction D2 are raised and brought into contact with the dorsal region R so as to wrap around the abdomen of the dog 2 with the ventral region F. As a result, the torso 2a of the dog 2 is passed through the waist opening WO formed by the ventral region F and the dorsal region R, and the legs 2b of the dog 2 are passed through the pair of leg openings LO formed by the leg-surrounding regions FB of the ventral region F and the buttocks-covering region M.

The hook tapes 12a and 12b are attached to both ends of the abdominal band region FA of the ventral region F in the width direction D2, and the target tape 40 is attached to the backsheet 21 in the dorsal region R. Therefore, the diaper 1 can be worn by the dog 2 by engaging the hook tapes 12a and 12b with the target tape 40. In such a case, the target tape 40 is attached to the entire backsheet 21 in the width direction D2. This enables the hook tapes 12a and 12b to be engaged at any positions on the dorsal region R in the width direction D2, facilitating adjustment of the waist opening WO in accordance with the girth of the pet's torso.

Thus, the diaper 1 illustrated in FIG. 1 can be worn on a pet as a tape diaper which is fixed with tape.

(Method of Use and Operation of Tail-Hole Forming Portion 70)

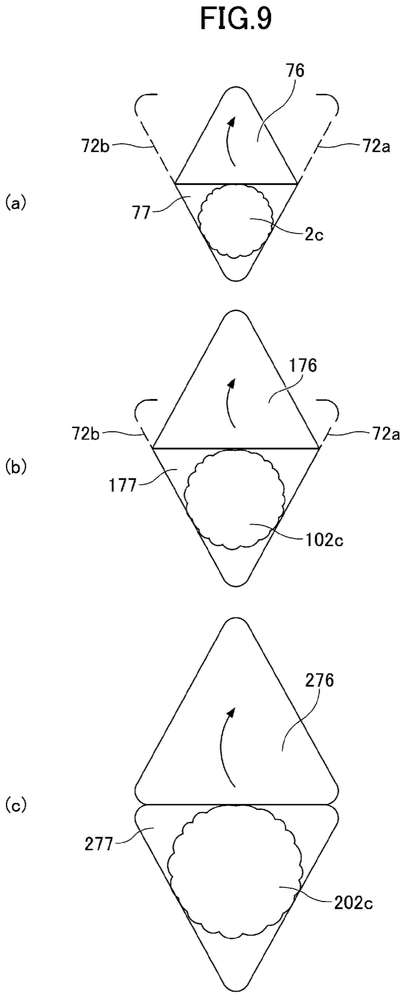

FIG. 9 is an explanatory view of a method of using the tail-hole forming portion 70 illustrated in FIGS. 1 and 5.

As illustrated in FIG. 9(a), in a case in which the diaper 1 illustrated in FIG. 1 is worn on a dog having a thin tail 2c, the tail hole 77 is formed by lifting the flap 76 formed by the V-shaped slit 71. Then, the tail 2c is inserted into the tail hole 77.

As illustrated in FIG. 9(b), in a case in which the diaper 1 illustrated in FIG. 1 is worn on a dog having a tail 102c thicker than the tail 2c illustrated in FIG. 9(a), the two perforations 72a and 72b extending from both ends of the slit 71 are torn according to the thickness of the tail 102c. Then, a flap 176 formed by the V-shaped slit 71 and the torn portions of the perforations 72a and 72b is lifted to form a tail hole 177. Since the flap 176 is formed by the V-shaped slit 71 and the torn portions of the perforations 72a and 72b, the flap 176 is larger than the flap 76 formed only by the V-shaped slit 71. Accordingly, the tail hole 177 is also larger than the tail hole 77 illustrated in FIG. 9(a). Then, the tail 102c is inserted into the tail hole 177.

As illustrated in FIG. 9(c), in a case in which the diaper 1 illustrated in FIG. 1 is worn on a dog having a tail 202c thicker than the tail 102c illustrated in FIG. 9(b), the two perforations 72a and 72b extending from both ends of the slit 71 are all torn. Then, a flap 276 formed by the V-shaped slit 71 and the perforations 72a and 72b is lifted to form a tail hole 277. Since the flap 276 is formed by the V-shaped slit 71 and the perforations 72a and 72b, the flap 276 is larger than the flap 176 illustrated in FIG. 9(b). Accordingly, the tail hole 277 is also larger than the tail hole 177 illustrated in FIG. 9(b). Then, the tail 202c is inserted into the tail hole 277. At this time, in a case in which a tearing force is strong to tear the entirety of the perforations 72a and 72b, there is a concern of potentially tearing beyond the ends of the perforations 72a and 72b opposite to the slit 71. Herein, as illustrated in FIG. 5, the perforations 72a and 72b have the ends 75a and 75b that are opposite to the slit 71 and formed in a rounded pattern. Therefore, at the ends 75a and 75b of the perforations 72a and 72b opposite to the slit 71, a direction in which the perforations 72a and 72b are directed is different from the direction in which the force to tear the perforations 72a and 72b is applied. This can avoid tearing beyond the perforations 72a and 72b at the time of tearing the perforations 72a and 72b.

As described above, for pets such as dogs or the like having the thin tail 2c, the tail hole 77 is formed by lifting the flap 76 formed by the V-shaped slit 71, and the tail 2c can be inserted into the tail hole 77. By tearing the two perforations 72a and 72b extending from both ends of the slit 71, the flap that can be lifted can be enlarged. Therefore, by tearing the perforations 72a and 72b to an extent corresponding to the size of the tail of the pet such as a dog wearing the diaper 1, a tail hole can be formed according to the size of the tail of the pet, and the tail 2c can be inserted therein.

In this way, it is possible to adjust the size of the tail hole with less burden by not tearing the perforations 72a and 72b or by changing the extent of tearing the perforations 72a and 72b upon tearing the perforations 72a and 72b. This makes it possible to accommodate differences in sizes of tails of pets with less burden.

The two perforations 72a and 72b constituting the tail-hole forming portion 70 are formed so that the distance between the two perforations 72a and 72b increases in accordance with increasing distance from the slit 71. Thus, as the portions of the perforations 72a and 72b to be torn are enlarged, the tail hole can be widened not only in the front-back direction D1 of the diaper 1 but also in the width direction D2 of the diaper 1. This facilitates the accommodation of a thick tail. In such a configuration, since the distance between the perforations 72a and 72b is shorter toward the slit 71, a thin tail is brought into contact with the ends where the perforations 72a and 72b are torn, and the lateral displacement of the diaper 1 can be prevented in the width direction D2.

The tail-hole forming portion 70 can also accommodate differences in positions of tails of pets. For example, as for a pet such as a dog having the thin tail 2c as illustrated in FIG. 9(a), if the tail 2c is located more toward the dorsal side, it is possible that the tail may not face the tail hole 77 formed by lifting the flap 76 with only the slit 71. In this case, the perforations 72a and 72b are torn until the tail hole 77 faces the tail 2c. This enables the tail 2c to be inserted into the tail hole.

Similarly, by forming the tail hole so as to face not only the tail but also the anus of the pet, it is possible to easily discharge feces to the outside of the diaper while allowing the tail to be inserted.

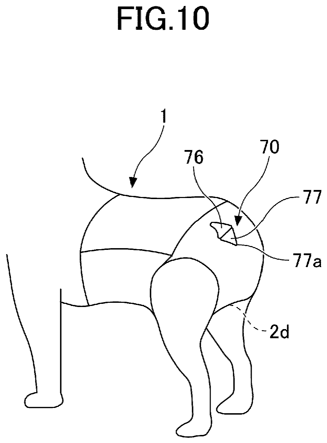

FIG. 10 is an explanatory view of the operation of the slit 71 illustrated in FIG. 5. In FIG. 10, the tail is omitted to facilitate understanding of the operation of the slit 71.

As described above, the vertex 71c of the V-shaped slit 71 in the present embodiment is directed toward the ventral region F, and thus the slit 71 bulges toward the abdomen of the pet wearing the diaper 1.

Thus, when the tail hole 77 is formed in the tail-hole forming portion 70 in order for a pet such as a dog or the like to wear the diaper 1, a vertex 77a of the triangle of the tail hole 77 is located toward the urethral opening 2d of the pet as illustrated in FIG. 10. Therefore, the width of the tail hole 77 is narrowed toward the urethral opening in the width direction D2. This reduces urine leakage from the tail hole 77. Note that in this case, the slit 71 is not required to be V-shaped to produce the operation described above as long as the slit 71 bulges toward the abdomen of the pet wearing the diaper 1. However, since the slit 71 has a V-shape, the end of the tail hole 77 has a pointed shape toward the urethral opening 2d such that the vertex 77a of the triangle of the tail hole 77 is located toward the urethral opening 2d of the pet. This further reduces urine leakage.

In the present embodiment, the slit 71 bulges toward the abdomen of the pet wearing the diaper 1, and the perforations 72a and 72b extend from both ends 71a and 71b of the slit 71 toward the dorsal side of the pet wearing the diaper 1. However, the slit 71 may bulge toward the dorsal side of the pet wearing the diaper 1, and the perforations 72a and 72b may extend from both ends 71a and 71b of the slit 71 toward the ventral side of the pet wearing the diaper 1. Note that, with the configuration as in the present embodiment described with reference to FIG. 10, it is possible to reduce urine leakage from the tail hole 77.

(Another Embodiment of Tail-Hole Forming Portion)

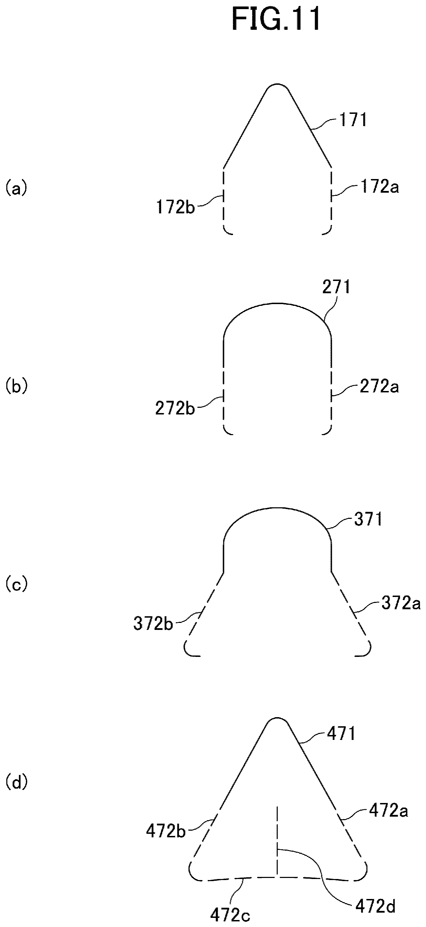

FIG. 11 is a view illustrating a tail-hole forming portion according to another embodiment.

As illustrated in FIG. 11(a), a tail-hole forming portion according to the present invention may be constituted by a V-shaped slit 171 and two perforations 172a and 172b extending from both ends of the slit 171 in the front-back direction D1 of the diaper toward a direction opposite to the direction the V-shaped vertex points.

As illustrated in FIG. 11(b), the tail-hole forming portion according to the present invention may be constituted by a U-shaped slit 271 and two perforations 272a and 272b extending from both ends of the slit 271 in the front-back direction D1 of the diaper toward a direction opposite to the direction the U-shaped slit 271 projects.

As illustrated in FIG. 11(c), the tail-hole forming portion according to the present invention may be constituted by a U-shaped slit 371 and two perforations 372a and 372b formed so that the distance between the perforations 372a and 372b increases in accordance with increasing distance from the slit 371, from both ends of the slit 371 toward a direction opposite to the direction the U-shaped slit 371 projects.

As illustrated in FIG. 11(d), the tail-hole forming portion according to the present invention may be constituted by a slit 471 identical to the slit 71 illustrated in FIG. 5, perforations 472a and 472b identical to the perforations 72a and 72b illustrated in FIG. 5, a perforation 472c connecting ends of the perforations 472a and 472b opposite to the slit 471, and a perforation 472d extending between the perforations 472a and 472b in the front-back direction D1 of the diaper. In such a configuration, the perforation 472d is torn, and a portion of the perforation 472c intersecting the perforation 472d is also torn to an extent corresponding to a size of a tail to form two flaps to be lifted. Then, a tail hole is formed by lifting the two flaps so as to open, and a hole for discharging feces to the outside of the diaper is formed by lifting the flap formed by the slit 471. This enables the tail to be inserted as well as facilitates discharge of feces to the outside of the diaper.

(Anther Embodiment of Diaper)

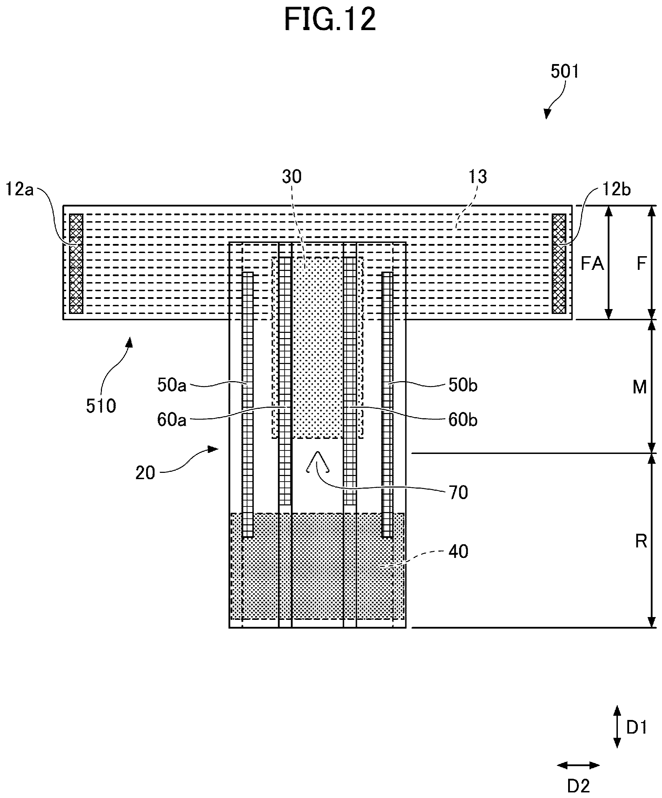

FIG. 12 is a view of an absorbent article for pets as seen from the skin-facing surface according to another embodiment of the present invention, and is a plan view in a deployed state.

As illustrated in FIG. 12, a diaper 501 according to the present embodiment includes an outer body 510 having a shape different from that illustrated in FIG. 1.

The outer body 510 in the present embodiment has only a belt-like shape in the width direction D2 serving as a longitudinal direction. Thus, a ventral region F in the present embodiment is constituted by only an abdominal band region FA provided with elastic members 13 and hook tapes 12a and 12b.

The diaper 501 thus constituted can produce the same operation as the diaper illustrated in FIG. 1 and can be used as both a pull-up diaper and a tape diaper. In the present embodiment, the ventral region F is constituted by only the abdominal band region FA provided with the elastic members 13 and the hook tapes 12a and 12b. Accordingly, the diaper 501 can be constituted as a pull-up diaper while a length of the ventral region F in the front-back direction D1 is shortened. This reduces the bulkiness of the diaper 501 being worn and improves slimness, thereby improving the appearance.

In the above-described embodiments, descriptions are given based on the example cases in which the diapers 1 and 501 illustrated in FIG. 1 and 12, respectively, are worn by a dog. However, the diapers 1 and 501 illustrated in FIGS. 1 and 12, respectively, can be worn not only by a dog but also by a cat or a small animal having a tail like a dog or a cat.

This application claims priority based on Japanese Patent Application No. 2023-062650 filed on April 7, 2023, the entire contents of which are incorporated herein by reference.

REFERENCE SIGNS LIST

| | |
|---|---|
| 1, 501 | Diaper |
| 2 | Dog |
| 2a | Torso |
| 2b | Leg |
| 2c, 102c, 202c | Tail |
| 2d | Urethral opening |
| 10, 510 | Outer body |
| 11a, 11b | Outer sheet |
| 11c, 62a, 62b | Folded-back portion |
| 12a, 12b | Hook tape |
| 13, 51a, 51b, 65a, 65b | Elastic member |
| 14a, 14b, 31, 67a, 67b, 68a, 68b | End |
| 20 | Inner body |
| 21 | Backsheet |
| 22 | Waterproof sheet |
| 23 | Top sheet |
| 30 | Absorbent core |
| 40 | Target tape |
| 50a, 50b | Flat gather |
| 60a, 60b | Standing gather |
| 61a, 61b | Gather sheet |
| 63, 64, 66 | Adhesive |
| 70 | Tail-hole forming portion |
| 71, 171, 271, 371, 471 | Slit |
| 71a, 71b, 75a, 75b | End |
| 71c, 77a | Vertex |
| 72a, 72b, 172a, 172b, 272a, 272b, 372a, 372b, 472a, 472b, 472c, 472d | Perforation |
| 73a, 73b | Cut portion |
| 74a, 74b | Tie portion |
| 76 | Flap |
| 77 | Tail hole |
| F | Ventral region |
| FA | Abdominal band region |
| FB | Leg-surrounding region |
| LO | Leg opening |
| M | Buttocks-covering region |
| R | Dorsal region |
| WO | Waist opening |

**Claims**

1. An absorbent article for a pet, configured to cover a region from an abdomen to a back of the pet extending via a tail of the pet, the absorbent article for the pet comprising:

a tail-hole forming portion in a region facing the tail, wherein
the tail-hole forming portion includes

a slit bulging toward one of the abdomen or the back, and
two perforations, each of the perforations extending from a corresponding end of both ends of the slit toward another of the abdomen or the back.

2. The absorbent article for the pet according to claim 1, wherein
the two perforations are formed such that a distance between the two perforations increases in accordance with increasing distance from the slit.

3. The absorbent article for the pet according to claim 1, wherein
the slit bulges toward the abdomen.

4. The absorbent article for the pet according to claim 3, wherein
the slit has a V-shape.

5. The absorbent article for the pet according to claim 1, wherein
ends of the perforations opposite to the slit are formed in a rounded pattern.

# FIG.1

# FIG.2

63  61a 65a 62a  62b 65b 61b  63

12a                                                                                                    11b    12b

51a  23    30          22 51b  21

11a

# FIG.3

63  61a  66  62a  62b  66  61b  63

22        64   23   64   40   21

# FIG.4

# FIG.5

(a)

(b)

(c)

(d)

# FIG.6

# FIG.7

# FIG.8

(a)

(b)

(c)

# FIG.9

(a)

(b)

(c)

# FIG.10

# FIG.11

(a)

171
172a
172b

(b)

271
272a
272b

(c)

371
372a
372b

(d)

471
472a
472b
472c
472d

# FIG.12

## INTERNATIONAL SEARCH REPORT

| International application No. |
| --- |
| **PCT/JP2024/009221** |

**A. CLASSIFICATION OF SUBJECT MATTER**

*A01K 23/00*(2006.01)i
FI: A01K23/00 S

According to International Patent Classification (IPC) or to both national classification and IPC

**B. FIELDS SEARCHED**

Minimum documentation searched (classification system followed by classification symbols)

A01K23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-205542 A (UNI-CHARM CO., LTD.) 25 October 2012 (2012-10-25) paragraphs [0042], [0054], [0055], fig. 1, 6, 8 | 1-4 |
| Y | | 5 |
| X | JP 2012-205561 A (DAIO PAPER CORPORATION) 25 October 2012 (2012-10-25) paragraph [0049], fig. 15 | 1, 3-4 |
| Y | | 5 |
| Y | JP 10-075679 A (OTA EIZAI K.K.) 24 March 1998 (1998-03-24) fig. 8, 15 | 5 |
| P, X | JP 2023-141818 A (UNI-CHARM CO., LTD.) 05 October 2023 (2023-10-05) paragraphs [0052], [0058], [0059], fig. 1, 3, 4, 8 | 1-4 |
| A | US 2018/0249681 A1 (MICROFINE, INC.) 06 September 2018 (2018-09-06) entire text, all drawings | 1-5 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 April 2024** | **28 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009221**

| Patent document cited in search report | | | Publication date (day/month/year) | Patent family member(s) | | | Publication date (day/month/year) |
|---|---|---|---|---|---|---|---|
| JP | 2012-205542 | A | 25 October 2012 | US paragraphs [0089], [0090], [0111], [0112], fig. 1, 6, 8 WO CN | 2014/0076246 2012/132886 103442555 | A1 A1 A | |
| JP | 2012-205561 | A | 25 October 2012 | (Family: none) | | | |
| JP | 10-075679 | A | 24 March 1998 | US fig. 8, 15 | 5954015 | A | |
| JP | 2023-141818 | A | 05 October 2023 | WO paragraphs [0052], [0058], [0059], fig. 1, 3, 4, 8 | 2023/181784 | A1 | |
| US | 2018/0249681 | A1 | 06 September 2018 | US entire text, all drawings | 2023/0189761 | A1 | |

Form PCT/ISA/210 (patent family annex) (July 2022)

**REFERENCES CITED IN THE DESCRIPTION**

**Patent documents cited in the description**

- JP 2983929 B

- JP 2023062650 A